# EUROPÄISCHE PATENTSCHRIFT

(11) **EP 0 445 326 B1**
(45) Veröffentlichungstag und Bekanntmachung des Hinweises auf die Patenterteilung: **11.05.1994**
(21) Anmeldenummer: 90104307.5
(22) Anmeldetag: 07.03.1990
(51) Int. Cl.: B29C 63/34, F16L 55/16

(54) **Vorrichtung zum Einführen eines Kunststoffrohres in eine Rohrleitung**
Apparatus for inserting a plastic tube in a pipeline
Dispositif pour l'introduction d'un tuyau en matière plastique dans une canalisation

(43) Veröffentlichungstag der Anmeldung: 11.09.1991
(73) Patentinhaber: HERMANN SEWERIN GBR, D-33332 Gütersloh (DE)
(72) Erfinder: Peitz, Kurt, D-4100 Duisburg 1 (DE); Vinnenberg, Ralf, D-4840 Rheda-Wiedenbrück (DE)
(74) Vertreter: Stracke, Alexander, Dipl.-Ing.

(56) Entgegenhaltungen:
- EP-A- 0 098 547
- WO-A-88/04387
- GB-A- 2 227 543

## Beschreibung

Die vorliegende Erfindung betrifft eine Vorrichtung zum Einführen eines Kunststoffrohres in eine Rohrleitung gemäß dem Oberbegriff des Anspruchs 1.

Aus der DE-A 35 01 620 ist ein Verfahren bekannt geworden, mit dem thermoplastische Kunststoffrohre im Relining-Verfahren verlegt werden können, wobei das im Querschnitt runde Rohr vor einem Einführen in die Rohrleitung unter Wärmeeinwirkung abgeflacht wird, um so in geringen Biegeradien gebogen werden zu können, damit ein einfaches Einführen und Umlenken innerhalb z.B. einer Baugrube oder eines Kanalschachtes möglich wird.
Vor dem Einführen des Rohres in die Rohrleitung wird das abgeflachte Kunststoffrohr durch Runden wieder in seine ursprüngliche Querschnittsform gebracht.

Vorrichtungen der gattungsgemäßen Art sind aus der EP-A-0 098 547 und der WO-A-88 04 387 bekannt, um mit Hilfe anderer Relining-Verfahren das Kunststoffrohr in die Rohrleitung einzuschieben. Diese Vorrichtungen sind jedoch nicht geeignet, das in der DE-A 35 01 620 beschriebene Verfahren durchzuführen.

Der vorliegenden Erfindung liegt daher die Aufgabe zugrunde, eine Vorrichtung der gattungsgemäßen Art so zu gestalten, daß das Kunststoffrohr vor dem Einführen in die Rohrleitung abgeflacht, gebogen und wieder gerundet wird.

Diese Aufgabe wird erfindungsgemäß durch die im Anspruch 1 genannten Merkmale gelöst.

Zunächst ist danach oberhalb der Umlenkrolle eine Formeinrichtung vorgesehen, mit der das, beispielsweise durch Dampf erwärmte Kunststoffrohr abflachbar ist. Dabei wird dieses durch einen Wirkspalt gezogen, der durch ein Führungsrad, auf dem das Kunststoffrohr aufliegt, und ein Preßteil, das an der gegenüberliegenden Seite des Kunststoffrohres anliegt, gebildet wird.

Zweckmäßigerweise ist die Formeinrichtung außerhalb des ersten Schachtes angeordnet,so daß für das Einspeisen des vor dem Eintritt in die Formeinrichtung runden Kunststoffrohres ausreichend Platz vorhanden ist.

Eine vorteilhafte Ausgestaltung der Erfindung sieht vor, daß das Preßteil gegenüber dem Führungsrad verschwenkbar ist, so daß eine maulartige Öffnung entsteht und ein einwandfreies Einführen des Kunststoffrohranfangs möglich ist. Danach wird das Preßteil bis auf Wirkspaltbreite zurückgeschwenkt. Das erwärmte Kunststoffrohr wird in an sich bekannter Weise durch ein Seil, das beispielsweise durch die Rohrleitung bis zum zweiten Kanalschacht geführt ist, durch die Formeinrichtung gezogen, wobei sich dann das Kunststoffrohr abflacht.

Ein weiterer vorteilhafter Gedanke der Erfindung sieht vor, daß das Preßteil mit einer Vielzahl nebeneinanderliegender Rollen versehen ist, an denen sich das eingeführte Kunststoffrohr abstützt, so daß ein leichteres Ziehen durch den Wirkspalt möglich ist, wobei das Führungsrad selbstverständlich drehbar ist.

Das so abgeflachte Kunststoffrohr wird nach einem Einführen in den ersten Kanalschacht um die Umlenkrolle in den Wirkbereich einer Kalibriereinrichtung geführt, die seitlich so an das abgeflachte Kunststoffrohr angepreßt wird, daß dieses seine ursprünglich runde Form wieder annimmt. Nach dieser Umformung wird das Kunststoffrohr in seine endgültige Lage innerhalb der Rohrleitung gebracht. Dabei kann die Kalibriereinrichtung aus mindestens zwei sich gegenüberliegenden Andruckwalzen bestehen. Denkbar ist auch der Einsatz beispielsweise zweier Andruckbleche oder dergleichen.

Die Anzahl der seitlich angeordneten Andruckwalzen kann variieren.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: einen Querschnitt durch eine in einen Kanalschacht eingebaute Vorrichtung gemäß der Erfindung,

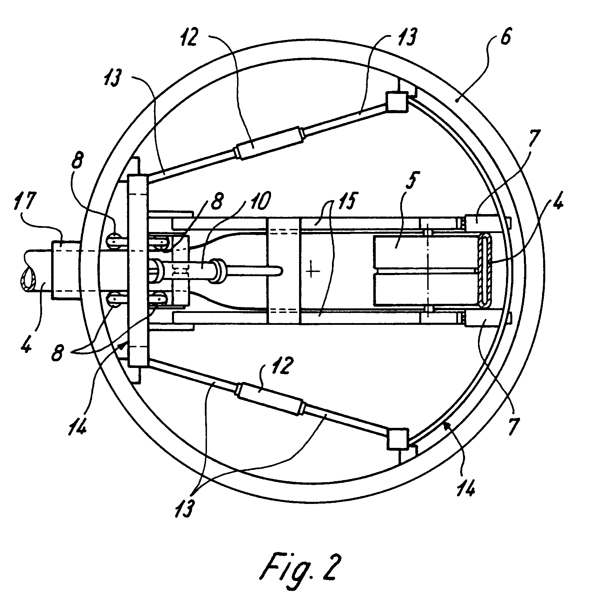

- Fig. 2: eine Draufsicht auf den in den Kanalschacht eingebauten Teil der Vorrichtung.

Im Innern eines ersten Kanalschachtes 6, der durch eine Rohrleitung 17 mit einem nicht dargestellten zweiten Kanalschacht verbunden ist, ist, etwa fluchtend mit der Rohrleitung 17 eine Umlenkrolle 5 angeordnet, über die ein senkrecht in den Kanalschacht 6 eingeführtes Kunststoffrohr 4 geführt und um etwa 90° umgelenkt wird, so daß das Kunststoffrohr 4 in die Rohrleitung 17 eingeführt werden kann.

Oberhalb der Umlenkrolle 5, und zwar außerhalb des Kanalschachtes 6 ist eine Formeinrichtung 1 angeordnet, die aus einem Führungsrad 3 und einem mit dem Führungsrad 3 einen Wirkspalt bildenden Preßteil 2 besteht. Durch diesen Wirkspalt wird das zunächst im Querschnitt runde Kunststoffrohr 4 gezogen und dadurch abgeflacht, daß die Breite des Wirkspaltes kleiner ist als der Durchmesser des Kunststoffrohres 4.

Zur besseren Verformbarkeit wird das aus einem thermoplastischen Kunststoff bestehende Kunststoffrohr 4 durch Einführen von beispielsweise Dampf erwärmt, wobei in an sich bekannter Weise die Enden des Kunststoffrohres 4 soweit abgedichtet sind, daß der Dampf nicht unkontrolliert entweichen kann.

Am vorderen Ende des Kunststoffrohres 4 ist ein Seil festgelegt, das durch den ersten Kanalschacht 6, die Rohrleitung 17 und den zweiten, nicht dargestellten Kanalschacht geführt ist, wobei dort eine Seilwinde ist, mit der das Kunststoffrohr 4 durch die Vorrichtung und die Rohrleitung 17 zu ziehen ist.

Um ein besseres Einführen des Kunststoffrohranfangs in den Kanalschacht 6 zu ermöglichen, ist die Umlenkrolle 5 mittels eines an einem Stützrahmen 14 festgelegten Hydraulikzylinders 10 soweit verschwenkbar, daß sich eine ausreichend große Einführöffnung für das Kunststoffrohr 4 ergibt.
Dabei stützt sich das durch die Rohrleitung 17 geführte Seil zunächst an einer Seilwalze 9 ab, bis das Kunststoffrohr 4 soweit in den Kanalschacht 6 eingezogen ist, daß die Umlenkrolle 5 wieder in eine Arbeitsstellung verschwenkt werden kann, in der sie dann am Kunststoffrohr 4 anliegt.

Die Umlenkrolle 5 ist an einem Krakarm 15 befestigt, an dem der Hydraulikzylinder 10 angreift und der durch eine Achse 11, die auf der der Umlenkrolle 5 gegenüberliegenden Endseite angeordnet ist, verschwenkbar ist.

Am anderen, freien Endbereich des Krakarmes 15, sind Führungsrollen 7 angeordnet, die ein seitliches Verlaufen des abgeflachten Kunststoffrohres 4 verhindern.

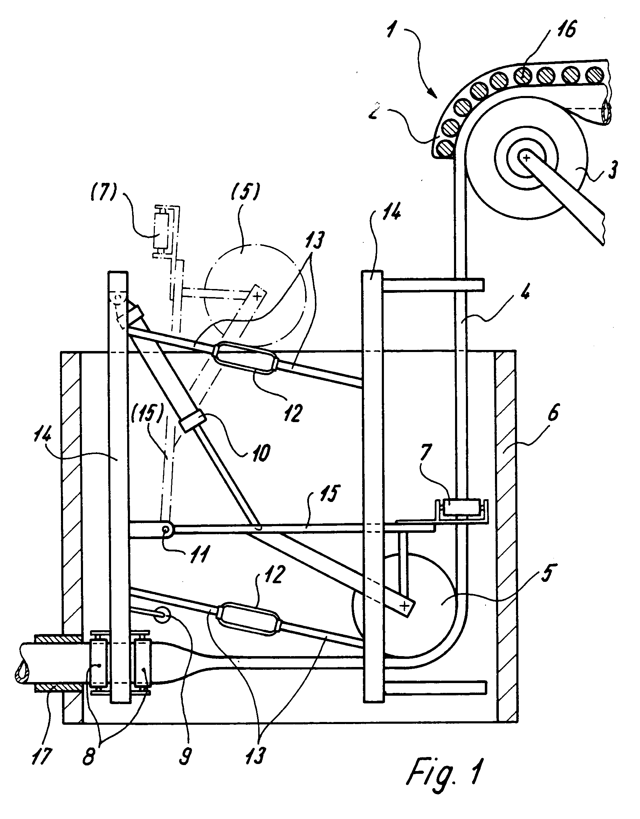

Die beim Einführen des Kunststoffrohres 4 eingenommene verschwenkte Stellung der Umlenkrolle 5 und der mit ihr über den Krakarm 15 verbundenen Führungsrollen 7 ist strichpunktiert in der Figur 1 dargestellt.

Zum besseren Einführen des Kunststoffrohres 4 in die Formeinrichtung 1 kann vorgesehen sein, daß das Preßteil 2 gegenüber dem Führungsrad 3 verschwenkt wird, so daß sich der Wirkspalt in seiner Breite soweit verändert, daß er größer wird als der Durchmesser des eingesetzten Kunststoffrohres 4.
Nach dessen Einführen wird das Preßteil 2 wieder zurückgeschwenkt, wobei dann das Kunststoffrohr 4 aufgrund seiner Plastifizierungsfähigkeit abgeflacht wird.

Neben der Möglichkeit das Preßteil 2 zu verschwenken, kann beispielsweise auch vorgesehen sein, eine trichterförmige Einführhilfe an der Formeinrichtung 1 vorzusehen, in die das Kunststoffrohr 4 praktisch eingefädelt wird.

Zu dessen besserem Abrollen innerhalb der Formeinrichtung ist das Preßteil 2 mit Rollen 16 versehen, an denen sich das Kunststoffrohr 4 abstützt, wobei das Preßteil so gestaltet ist, daß gleichzeitig mit dem Abflachen das Kunststoffrohr 4 aus einer horizontalen Lage in eine vertikale gebracht wird.

Der Umlenkrolle 5 nachgeordnet sind in dem der Rohrleitung 17 zugewandten Bereich ein Stützrahmen 14, Andruckwalzen 8 vorgesehen, die an die Schmalseite des abgeflachten Kunststoffrohres 4 anpreßbar sind und mit deren Hilfe dies in seine ursprüngliche runde Form gebracht wird.

Im vorliegenden Ausführungsbeispiel sind vier Andruckwalzen 8 angeordnet, von denen jeweils zwei sich gegenüberliegend an den entsprechenden Schmalseiten des Kunststoffrohres 4 anliegen.

Um eine schnelle Montage bzw. Demontage der Vorrichttung, insbesondere des im Kanalschacht 6 plazierten Teiles zu ermöglichen, sind zwei sich gegenüberliegende Stützrahmen 14 über Streben 13 miteinander verbunden, die wiederum mit Spannschlössern 12 versehen sind, mit denen ein Anpressen an die Wandung des Kanalschachtes 6 bzw. ein Lösen davon möglich ist.
Prinzipiell sind auch andere Spreizelemente denkbar, mit denen ein Anpressen der Stützrahmen 14 ermöglicht wird.

## Patentansprüche

1. Vorrichtung zum Einführen eines thermoplastischen Kunststoffrohres in eine zwei Kanalschächte oder dergleichen miteinander verbindende Rohrleitung, wobei im ersten Kanalschacht eine Umlenkrolle angeordnet ist, über die das Kunststoffrohr führbar ist, **dadurch gekennzeichnet,** daß oberhalb der Umlenkrolle (5) eine das Kunststoffrohr (4) abflachende Formeinrichtung angeordnet ist, die aus dem Führungsrad (3), auf dem das Kunststoffrohr (4) führbar ist, und einem zusammen mit dem Führungsrad (3) einen Wirkspalt bildenden Preßteil (2) besteht, wobei der Wirkspalt schmaler ist als der Durchmesser des abzuflachenden Kunststoffrohres (4), und daß der Umlenkrolle (5) eine Kalibriereinrichtung nachgeordnet ist, die an die Schmalseiten des abgeflachten Kunststoffrohres anpreßbar ist.

2. Vorrichtung nach Anspruch 1, dadurch gekennzeichnet, daß die Kalibriereinrichtung aus mindestens zwei,sich gegenüberliegenden Andruckwalzen (8) besteht.

3. Vorrichtung nach Anspruch 1 oder 2, dadurch gekennzeichnet, daß die Umlenkrolle (5) und die Kalibriereinrichtung mittels verspannbarer Stützrahmen (14) ortsfest im Kanalschacht (6) positionierbar sind.

4. Vorrichtung nach Anspruch 1, dadurch gekennzeichnet, daß die Umlenkrolle (5) aus einer Gebrauchs- in eine Nichtgebrauchsstellung verschwenkbar ist.

5. Vorrichtung nach Anspruch 4, dadurch gekennzeichnet, daß die Umlenkrolle (5) an einem Kragarm (15) festgelegt ist, der auf der der Umlenkrolle (5) gegenüberliegenden Seite auf einer Achse (11) schwenkbar gelagert ist, wobei an einem Stützrahmen (14) ein Hydraulikzylinder (10) befestigt ist, der andererseits mit dem Kragarm (15) verbunden ist.

6. Vorrichtung nach Anspruch 1, dadurch gekennzeichnet, daß oberhalb der Umlenkrolle (5), der Formeinrichtung (1) zugewandt, zwei sich gegenüberliegende Führungsrollen (7) festgelegt sind, an denen das abgeflachte Kunststoffrohr (4) seitlich abstützbar ist.

7. Vorrichtung nach Anspruch 3, dadurch gekennzeichnet, daß zwei sich gegenüberliegende Stützrahmen (14) durch Streben (13) miteinander verbunden sind, wobei die Streben (13) durch Spannschlösser (12) spreizbar sind.

8. Vorrichtung nach Anspruch 1, dadurch gekennzeichnet, daß das Preßteil (2) gegenüber dem Führungsrad (3) verschwenkbar ist.

9. Vorrichtung nach Anspruch 1, dadurch gekennzeichnet, daß das Preßteil (2) mit Rollen (16) versehen ist, an denen das Kunststoffrohr (4) anliegt.

## Claims

1. An apparatus for inserting a thermoplastics plastics tube into a pipeline which connects together two conduit shafts, or the like, wherein arranged in the first conduit shaft is a direction-changing roller around which the plastics tube is able to be guided, **characterised in that** arranged above the direction-changing roller (5) is a shaping device which flattens the plastics tube (4) and which consists of the guide wheel (3) over which the plastics tube can be guided and a moulded piece (2) which forms an active gap together with the guide wheel (3), wherein the active gap is narrower than the diameter of the plastics tube (4) to be flattened, and that arranged downstream of the direction-changing roller (5) is a calibration device which is able to be pressed against the narrow sides of the flattened plastics tube.

2. An apparatus according to Claim 1, characterised in that the calibration device consists of at least two mutually oppositely disposed pinch rollers (8).

3. An apparatus according to Claim 1 or Claim 2, characterised in that the direction-changing roller (5) and the calibration device are able to be positioned fixedly in the conduit shaft (6) by means of supporting frames (14) which can be braced.

4. An apparatus according to Claim 1, characterised in that the direction-changing roller (5) is able to be swung from an operative position into a non-operative position.

5. An apparatus according to Claim 4, characterised in that the direction-changing roller (5) is secured to a cantilever (15) which is pivotally mounted on an axis (11) on the side oppositely disposed to the direction-changing roller (5), wherein fixed to a supporting frame (14) is a hydraulic cylinder (10) which is connected on the other side to the cantilever (15).

6. An apparatus according to Claim 1, characterised in that fixed above the direction-changing roller (5), facing the shaping device (1), are two mutually oppositely disposed guide rollers (7) against which the flattened plastics tube (4) is able to be supported laterally.

7. An apparatus according to Claim 3, characterised in that two mutually oppositely disposed supporting frames (14) are connected together by stays (13), wherein the stays (13) are able to be spread by stay tighteners (12).

8. An apparatus according to Claim 1, characterised in that the moulded piece (2) is able to be pivoted towards the guide wheel (3).

9. An apparatus according to Claim 1, characterised in that the moulded piece (2) is provided with rollers (16) against which the plastics tube (4) rests.

## Revendications

1. Dispositif servant à introduire un tuyau en matière synthétique thermoplastique dans une conduite tubulaire reliant entre eux deux regards de canalisation ou similaires, un rouleau de déviation étant disposé dans le premier regard de canalisation, sur lequel le tuyau en matière synthétique est susceptible d'être guidé, caractérisé en ce qu'au-dessus du rouleau de déviation (5) est disposé un dispositif de formage, aplatissant le tuyau en matière synthétique (4), constitué de la roue de guidage (3), sur laquelle le tuyau en matière synthétique (4) est susceptible d'être guidé, et d'un organe presseur (2) formant une fente active avec la roue de guidage (3), la fente active étant plus étroite que le diamètre du tuyau en matière synthétique (4) destiné à être aplati, et en ce qu'un dispositif de calibrage est situé en aval du rouleau de déviation (5) et est susceptible d'être appliqué sur les flancs du tuyau en matière synthétique aplati.

2. Dispositif selon la revendication 1, caractérisé en ce que le dispositif de calibrage est constitué d'au moins deux cylindres presseurs (8) situés en regard l'un de l'autre.

3. Dispositif selon la revendication 1 ou 2, caractérisé en ce que le rouleau de déviation (5) et le dispositif de calibrage sont susceptibles d'être positionnés fixement dans le regard de canalisation (6) au moyen de cadres de support (14) susceptibles d'être mis en tension.

4. Dispositif selon la revendication 1, caractérisé en ce que le rouleau de déviation (5) peut pivoter d'une position d'utilisation dans une position de non-utilisation.

5. Dispositif selon la revendication 4, caractérisé en ce que le rouleau de déviation (5) est fixé sur un bras en porte-à-faux (15), monté pivotant sur un axe (11), du côté opposé au rouleau de déviation (5), un vérin hydraulique (10) étant fixé sur un cadre de support (14), et étant relié, d'autre part, au bras en porte-à-faux (15).

6. Dispositif selon la revendication 1, caractérisé en ce qu'au-dessus du rouleau de déviation (5), orientés en direction du dispositif de formage (1), deux rouleaux de guidage (7) sont fixés et disposés en regard l'un de l'autre, sur lesquels le tuyau en matière synthétique (4) aplati peut s'appuyer latéralement.

7. Dispositif selon la revendication 3, caractérisé en ce que deux cadres de support (14), en regard l'un de l'autre, sont reliés l'un à l'autre par des traverses (13), les traverses (13) pouvant être étirées par des tendeurs (12).

8. Dispositif selon la revendication 1, caractérisé en ce que l'organe presseur (2) est susceptible de pivoter par rapport à la roue de guidage (3).

9. Dispositif selon la revendication 1, caractérisé en ce que l'organe presseur (2) est pourvu de rouleaux (16) sur lesquels repose le tuyau en matière synthétique (4).
